# EUROPEAN PATENT APPLICATION

(11) **EP 1 162 464 A1**
(43) Date of publication of application: **12.12.2001**
(21) Application number: 01304869.9
(22) Date of filing: 04.06.2001
(51) Int. Cl.: G01N 35/08

(54) **Method and device for increasing efficiency of bioanalysis**

(30) Priority: 08.06.2000 US 210287 P
(71) Applicant: Pfizer Products Inc., Groton, Connecticut 06340 (US)
(72) Inventor: Cole, Roderic Oconor, Plaistow, New Hampshire 03865 (US); Hiller, Donna Leah, Pfizer Global Res. and Develop, Goton, Connecticut 06340 (US)
(74) Representative: Rees, Alexander Ellison

(57) **Abstract**

Quantitative analysis speed can be increased at least four-fold via use of liquid phase flow segmentation. An analysis device such as a mass spectrometer 40 is supplied with a single continuous stream 100 consisting of individual segments made from four different chromatographic or flow injection testing streams by use of a timed valve or injector 10. The stream is formed of solution segments A-D of the different compounds, with the compound solution segments being separated by known fluid or solvent segments S. The nature of the individual solution segments is controlled by a high pressure valve which comprises correlated timing elements and selection elements for determining which compounds are being directed to the analysis device at any given time, for correlation to separate analysis results. The selection elements are, for example, perforations 1-5 in a rotating disc which are selectively aligned for a software-specified time, with stream sources of the different compounds and a conduit 21 leading to the analysis device or directly thereto. A time correlated read-out matches results with specific compounds. Throughput of compounds for testing is multiplied to the physical handling limits of the analysis device. For current mass spectrometers, at least four fold over conventional methods.

## Description

### FIELD OF THE INVENTION

This invention relates to methods for testing candidate drug compounds such as by mass spectroscopy for drug-drug interactions, and other in vitro assays. It particularly relates to a means for increasing the efficiency, speed, flexibility of use and throughput in which analytical results can be obtained on large numbers of compounds.

### Background of the Invention

Since the number of molecules synthesized by pharmaceutical companies has dramatically increased with the utilization of combinatorial chemistry, there is now a shift in emphasis towards earlier implementation of higher throughput *in vitro* studies such as for metabolism or lead optimization. Thus, for example, the prediction of drug-drug interactions of new chemical entities using *in vitro* methods, such as human liver microsomes (HLMs), hepatocytes or individual expressed CYPs has escalated both in importance and scale of use, as one way to reliably avoid potential interactions *in vivo.* Analysis devices such as mass spectrometers are utilized in providing relevant screening data of such interactions as well as other beneficial or detrimental characteristics of candidate drug compounds.

As part of the standard analysis procedure with mass spectrometers, the samples to be tested are placed on an autosampler in vials or in multiwell plates. A needle assembly, takes up a small (on the order of 20 µL) sample from each vial and aspirates it into a highpressure valve having load and inject positions. In the load position, the sample is aspirated into a sample loop having a fixed volume. The valve is then actuated into the inject position, where the sample residing in the loop is made a part of a flowing stream which sweeps the sample from the valve to the mass spectrometer or first onto an HPLC column, where a separation occurs and then the sample is fed into the mass spectrometer source. In the mass spectrometer the sample flows through a fused silica capillary to a charged stainless steel needle held at high (3000-5000) voltage. This potential causes the formation of a liquid spray known as electrospray, wherein ions of the analyte are formed where they are then entrained into the mass analyzer sections of the instrument for the analysis. For consistency and validation of results, numerous sample feeds are effected. The numerous samples are loaded and injected in a cycle with the time of the cycle being the time between starting a series of samples (or an injection into the HPLC system) and the subsequent set of samples. At present, this cycle time is on the order of about one minute.

It is highly desirable to maximize the efficiency in utilizing the analysis devices such as mass spectrometers to provide screening information about the candidate drug compounds and particularly with respect to the manner in which samples are introduced to the mass spectrometer for analysis. Usually such efforts have entailed the use of multiple flow streams directed at the spectrometer. Initial attempts at interfacing multiple flow or chromatographic streams to a single mass spectrometer have included the use of multiple sprayer sources, e.g., as described by de Biasi, V.; Haskins, N.; Organ, A.; Bateman, R.; Giles, K.; Jarvis, S. *Rapid Communications in Mass Spectrometry* 1999; **13**: 1165 and Jiang, L.; Moini, M. *Analytical Chemistry* 2000; **72**: 20. These have led to at least two commercial instruments. Each of these applications and devices rely on gas-phase multiplexing of the flow streams and not analysis in the liquid phase, prior to the mass spectrometer ion source. However, tests for drug compound reactions occur in liquid phase, a phase which these devices and disclosures do not address. In addition, with multiple sprayers, there is no flexibility for the physical positioning of the sprayer relative to the mass analyzer portion of the instrument. This is problematic since there is only one inlet to the mass spectrometer and the multiple sprayers must share the inlet with uneven and inconsistent results.

### Summary of the Invention

It is accordingly an object of the present invention to provide a method and device for increasing the analysis throughput of an analysis device, such as a mass spectrometer, to increase the number of compounds which can be screened in a given period of time.

It is a further object of the present invention to provide a method and device which effectively provides a single spray injection to a mass spectrometer with multiple samples within the single spray stream, wherein, unlike other instrument configurations based on multiple sprayers, where there is no flexibility for the physical positioning of the sprayers relative to the mass analyzer portion of the instrument, the ion transmission can be optimized for each flow stream.

Generally the present invention comprises a method, and device for effecting said method, for maximizing the rate of sample input and cycling into the analysis device, particularly a mass spectrometer. Devices such as mass spectrometers operate with a vaporization/ionization time measurable in milliseconds. The time bottle-neck associated with such devices is however the speed at which the compounds being analyzed are introduced for analysis, either by chromatographic or flow injection based methods.

Normally, compound introduction is effected in a sequential fashion, after analysis is completed, and there is an inherent delay involved between the completion of analysis for one sample and the introduction of the next. The present invention is a multiplexing device which allows multiple and particularly four analysis streams containing drug candidate compounds to be introduced for quantification to an analysis device such as the mass spectrometer. This is achieved by the generation of a continuous feed stream comprised of liquid segments which are comprised from each of the four analysis streams, with each stream segment comprised of a different compound. The stream segments are separated in situ by non-analyzed segments such as simple solvents. Since the analysis is in a continuous stream of different segments, separated by non-analyzed segments, the timing of sample segment input are correlated to mass analysis and quantitative measurement. As a result, the analyses of four different flow streams or compounds is possible in a nearly simultaneous manner, using only one analysis device.

In accordance with the method of the present invention the following steps are taken to achieve liquid-phase multiplexed analysis and higher throughput (at least four-fold with present mass spectrometer analytic capability) than conventional serial introduction:
i) Multiple samples (e.g. four) are introduced into corresponding multiple separate flow or chromatographic streams, each connected by appropriate tubing to said analysis means by timed selective introduction means, as particularly embodied by a flow segmentation valve under flow stream pressure, having means for selecting a flow from a single source and sample at a time;
ii) The resulting sample stream from the selective introduction means is introduced into the analysis device, with the analysis device operated under conditions specific for each compound;
iii) The generation of each sample segment, with input of said samples, is correlated to a timed output analysis of said compounds whereby specific compounds are correlated to specific analysis results therefor; and
wherein results for samples of the material with known analytical properties function as demarcation lines between results of compounds being analyzed.

A device effective for use in the method of the present invention comprises:
a) means for introducing multiple (e.g., four) samples simultaneously into corresponding multiple (e.g. four) chromatographic or flow streams and means for forming a segmented sample stream therefrom;
b) conduit means between the segmented sample stream and an analysis device for providing said segmented sample stream to the device for analysis of separate samples;
c) means for providing a delineated separation between the sample segments of said segmented sample stream; and
d) timing means for selectively coordinating arrival of sample segments of the segmented sample stream with the appropriate analysis device acquisition of the corresponding sample, for a pre-selected period of time; and
e) means for continuously providing said segmented sample stream to the device for analysis for a predetermined cycle time.

It is understood that the use of four segments in the above method is merely exemplary of the present invention as being correlated to maximum efficient utilization of currently available mass spectrometers but additional sample introduction in a continuous stream is possible, as a function of mass spectrometer or other analysis device capability.

Additional objects, features and advantages of the present invention will become more evident from the following discussion and drawings in which:

### Short Description of the Drawings

Figure 1 is a schematic view of a flow segmentation valve for selective, separate and timed transmission of samples arising from multiple flow solvent streams for analysis to a mass spectrometer device;
Figure 2 is a schematic representation of the composition of the segmented flow stream; and
Figure 3 is a schematic of the instrumentation involved in multiplexed analysis with one of the streams having been separated in an HPLC system.

### Detailed Description of the Invention

In accordance with the present invention the means for providing the segmented sample stream is preferably a multi-variable-valve which is under high pressure whereby rapid bursts of pressurized compounds are rapidly fed into the mass spectrometer as a continuous stream of stream segments. The valve operates by rapidly rotating around to each source flow stream, pausing at each position for a software-specified time, with a short solvent burst between segments.

The mass spectrometer is set to follow a single ion or fragment ion characteristics of each analyte in each flow stream. The mass spectrometer is timed such that cycling of the proper ion/fragment ion coincides with the arrival of proper sample stream segment to the mass spectrometer source. Accordingly, the ion associated with an analyte will be tracked when the flow segment from the sample stream from that analyte is entering the mass spectrometer.

### Detailed Description of the Drawings and The Preferred Embodiments

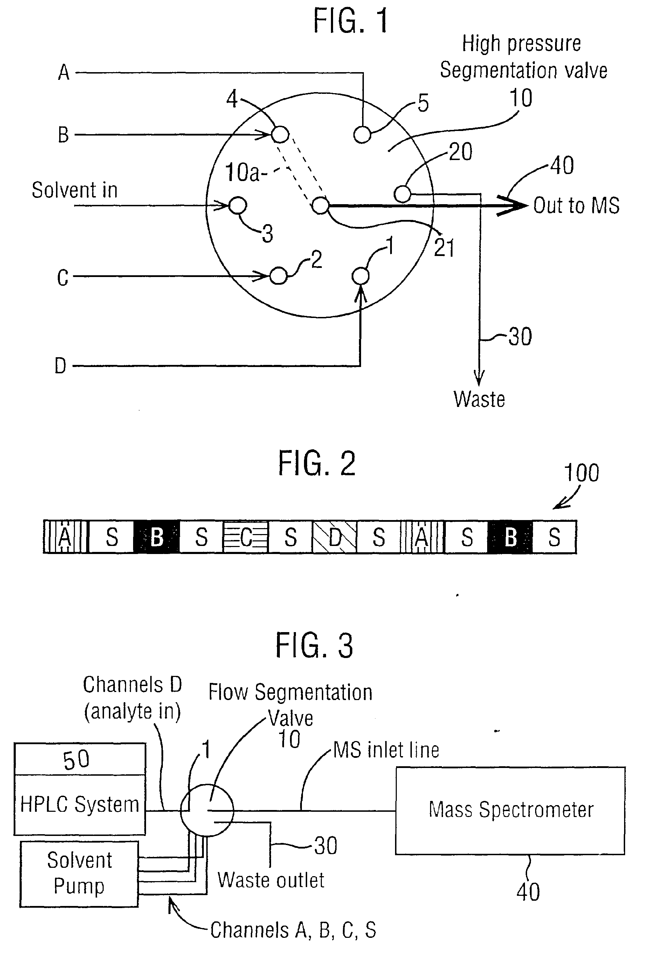

Figure 1 depicts flow segmentation valve 10. Each of the respective inlet ports 1-5 is connected to a corresponding flow stream corresponding to samples A-D and a solvent stream (S). Two outlets 20 and 21, for the valve lead to waste line 30 and analysis device 40 respectively. The outlet 20 provides a means of disposing of the flow stream via waste line 30 for relieving pressure from streams not currently being sampled. Feed line 21 leading from outlet 21 carries the segmented flow stream 100 to the analysis device 40 such as a mass spectrometer equipped with an electrospray ionization source. Valve conduit 10a, shown in dotted lines, rotates within the valve to effect the desired flow connection and completion of channel connection of a particular compound to the mass spectrometer 40.

Figure 2 shows a schematic of the composition of the segmented flow stream with repeated sequential segments of samples A, B, C, and D with separating segments of solvent S. Segment-segment contamination is avoided by separating each flow channel's segment with a solvent plug segment. Thus, the analysis device has a repeating sequence of sample stream segments introduced to it, in a continuous manner for the duration of the analysis time.

To demonstrate operability Figure 3 shows a schematic of a standard HPLC system 50 interfaced with the flow segmentation valve 10 of Figure 1. In this case, the system is configured to analyze only one channel D, with each of the other channels being fed only solvent. In this manner, the effects of the flow segmentation process on a single channel is observed and effective operability is by the replicate injection of a single analyte into a single channel of the flow segmentation valve.

### Example

The following Table shows the precision of response when the valve shown in Figure 3 is operating with a 100 millisecond cycle time. It is clear that while the imprecision increases as a result of the flow segmentation process, the valve can be operated to sample a chromatographic flow stream to give precision acceptable for quantitative analysis. Units for the channels are relative areas under analysis curves for the single compound and for the solvent.

**TABLE**

| Injection | Channel 1 | % of Total | Channel 2 | % of Total | Channel 3 | % of Total | Channel 4 | % of Total |
|---|---|---|---|---|---|---|---|---|
| 1 | 888600 | 99.61 | 2010 | 0.225 | 690 | 0.077 | 780 | 0.087 |
| 2 | 805300 | 99.825 | 1260 | 0.156 | 150 | 0.019 | 0 | 0 |
| 3 | 822400 | 99.753 | 960 | 0.116 | 420 | 0.051 | 660 | 0.08 |
| 4 | 749500 | 99.589 | 1470 | 0.195 | 690 | 0.092 | 930 | 0.124 |
| 5 | 831900 | 99.519 | 2070 | 0.248 | 1080 | 0.129 | 870 | 0.104 |
| 6 | 835700 | 99.781 | 1830 | 0.219 | 0 | 0 | 0 | 0 |
| Mean | 822233 | 99.68 | 1600 | 0.193 | 505 | 0.061 | 540 | 0.066 |
| Standard Deviation | 45291 | 0.123 | 444 | 0.049 | 397 | 0.048 | 428 | 0.053 |
| (S.D./Mean)x10 0 | 6 | 0 | 28 | 25 | 79 | 78 | 79 | 81 |

Channel 1 is the channel where compound has been injected, the other 3 channels are being fed solvent. As a result, the area counts from the other channels are measures of channel-channel crosstalk. The last row is the relative standard deviation, in this case demonstrating that this method is precise enough to use for discovery level quantitation.

It is understood that the above drawings and example are merely exemplary of the present invention and that changes in analytic device, feed mechanism, timing, structure and the like may be made without departing from the scope of the present invention as defined in the following claims.

## Claims

1. A method for analysis of multiple compound samples with an analysis device having a single input channel for compounds, comprising the steps of:
i) introducing multiple compound samples into corresponding multiple separate solvent flow streams, with each of the flow streams being connected by connection means to an analysis device by timed selective introduction means, having means for selecting a flow from one of said multiple solvent flow streams at a time, whereby a single segmented flow stream is formed having separate segments, with each segment containing no more than one of said multiple compound samples;
ii) introducing the segmented flow stream into the analysis device, with the analysis device being selectively operated under conditions specific for each compound in the segmented flow stream;
iii) correlating the input of said samples within the segmented flow stream to a timed output analysis of said compounds whereby specific compounds are correlated to specific analysis results therefor; and
wherein output analysis for samples of any of compounds with known analytical properties and solvent function as demarcation lines between results of compounds being analyzed.

2. The method of claim 1, wherein the analysis device is a mass spectrometer.

3. The method of claim 2, wherein said segmented flow stream comprises four of said compounds.

4. The method of claim 1, wherein the compound segments of the segmented flow stream are separated with segments consisting essentially of a solvent.

5. The method of claim 1, wherein at least one of said multiple separate solvent flow streams is introduced into an HPLC device for separation prior to formation of said segmented flow stream.

6. A device effective for use in the method of claim 1 comprising:
a) means for introducing multiple compounds into corresponding multiple solvent flow streams and means for forming a single segmented multiple compound stream therefrom;
b) conduit means between the segmented multiple compound stream and an analysis device for providing said segmented multiple compound stream to the device for analysis of separate compounds contained within said segmented multiple compound stream;
c) means for providing a delineated separation between the sample segments of said segmented multiple compound stream; and
d) timing means for selectively coordinating arrival of compound segments of the segmented multiple compound stream with the appropriate analysis device acquisition of the corresponding compound, for a pre-selected period of time; and
e) means for continuously providing said segmented multiple compound stream to the device for analysis for a predetermined cycle time.
